Europäisches Patentamt

European Patent Office

Office européen des brevets

(11) Publication number: **0 135 113**
**B1**

# EUROPEAN PATENT SPECIFICATION

(45) Date of publication of patent specification: **06.04.88**

(21) Application number: **84109426.1**

(22) Date of filing: **08.08.84**

(51) Int. Cl.⁴: **G 09 F 3/06,** B 65 D 71/00 //
H01B7/36

(54) **Thermally shrinkable labeling band.**

(30) Priority: **11.08.83 JP 124966/83**

(43) Date of publication of application:
**27.03.85 Bulletin 85/13**

(45) Publication of the grant of the patent:
**06.04.88 Bulletin 88/14**

(84) Designated Contracting States:
**BE CH DE FR IT LI NL SE**

(56) References cited:
**FR-A-1 485 785**
**US-A-4 032 010**
**US-A-4 361 230**
**US-A-4 363 401**
**US-A-4 377 234**

(73) Proprietor: **YOSHIDA KOGYO K.K.**
**No. 1 Kanda Izumi-cho Chiyoda-ku**
**Tokyo (JP)**

(72) Inventor: **Watanabe, Kozo**
**4024, Mikkaichi**
**Kurobe-shi Toyama-ken (JP)**

(74) Representative: **Patentanwälte Leinweber &**
**Zimmermann**
**Rosental 7/II Aufg.**
**D-8000 München 2 (DE)**

## Description

The present invention relates to a thermally shrinkable labeling band adapted to be heat-fit around one or more products, comprising first and second strip members joined together along their end edges respectively, to form a closed loop, said first strip member including one surface of printable material having at least one character printed thereon.

In the manufacture of slide fasteners, each group of finished slide fasteners is bound into a bundle by a binding strip or band having on its front surface various characters indicative of product information such as the type, size, color, quantities, etc. of the bundle. The band is composed of a single strip of thermally shrinkable synthetic resin such as vinyl chloride or polyethylene, and requires a special printing equipment for providing clear characters on the synthetic resin band. The characters printed on the band are likely to be distorted and become unclear as the band is thermally shrunk. Since the bundle of slide fasteners is flexible, printing on the band fastened around such flexible slide fasteners is tedious and not suitable for an automated high speed production.

A thermally shrinkable labeling band of the type mentioned above is disclosed in US—A—4 361 230 and in US—A—4 363 401. In these US-patents it is stated that one or both strip members of the labeling band may be made of paper, particularly paper having a polyethylene coating. Moreover, it is stated that one or both strip members of the labeling band can be made of heat-shrinkable material as well as non-heat shrinkable material. It is further stated that the strip member of the band to be provided with a print ought to consist of a printable material.

These statements regarding the chemical or physical properties of the two strip members forming the labeling band are completely independent of each other, that is to say they are not connected by a logical idea with one another. Therefore, the reader is not able to recognize whether between the material properties "heat shrinkable" and non-heatshrinkable" on the one hand and "printable" or "non-printable", respectively, there ought to exist a definite connection. Both patents rather leave it unresponded how these material properties ought to be combined with one another. In this connection it is to be noted that it is proposed to provide the strip member consisting of paper with a polyethylene coating. As a matter of fact polyethylene is a heat-shrinkable material, however, if this strip member is provided with a print the printed markings during the subsequent heating of the labeling band formed of the two strip members change their original form and are — if at all — hardly legible since the polyethylene coating shrinks.

The present invention seeks to provide a thermally shrinkable labeling band which can be easily printed there-on various characters indicative of product information of one or more products bounded by the band and is heat-fittable around the products to firmly hold them together without causing any distortion of the characters.

According to the invention a thermally shrinkable labeling band satisfying these requirements is characterized in that said first strip member includes a sheet of paper and a film of thermally non-shrinkable synthetic resin laminated with one of the surfaces of said paper sheet, and that said second strip member is made of thermally shrinkable material, the end edges of which being united with said synthetic resin film of the first strip member at the end edges thereof.

When subjected to heat, the second strip member is shrunk to thereby enable the band to firmly bind the products together. Characters printed on the thermally non-shrinkable first strip member remain clear and are protected from being distorted.

Many other advantages and features of the present invention will become manifest to those versed in the art upon making reference to the detailed description and the accompanying sheets of drawings in which preferred structural embodiments incorporating the principles of the present invention are shown by way of illustrative example.

Figure 1 is a fragmentary perspective view of a thermally shrinkable labeling band according to the present invention;

Figure 2 is a view similar to Figure 1, showing a modified labeling band;

Figure 3 (a) is a diagrammatic front elevational view of an apparatus for binding products by means of the labeling band of Figure 1, the view showing the apparatus in pre-binding position;

Figure 3 (b) is a view similar to Figure 3 (a), showing the apparatus in binding position;

Figure 4 is an enlarged schematic perspective view of a group of slide fasteners loosely bound by the labeling band of Figure 1, the view showing the band before being thermally shrunk;

Figure 5 is a cross-sectional view taken along line V—V of Figure 4;

Figure 6 is a view similar to Figure 4, showing the slide fasteners tightly bound by the band after having been thermally shrunk.

Figure 7 is a cross-sectional view taken along line VII—VII of Figure 6;

Figure 8 is a schematic perspective view of a packed product around which the labeling band of Figure 1 is fastened; and

Figure 9 is a fragmentary schematic perspective view of an electric cord around which the labeling band of Figure 2 is fastened.

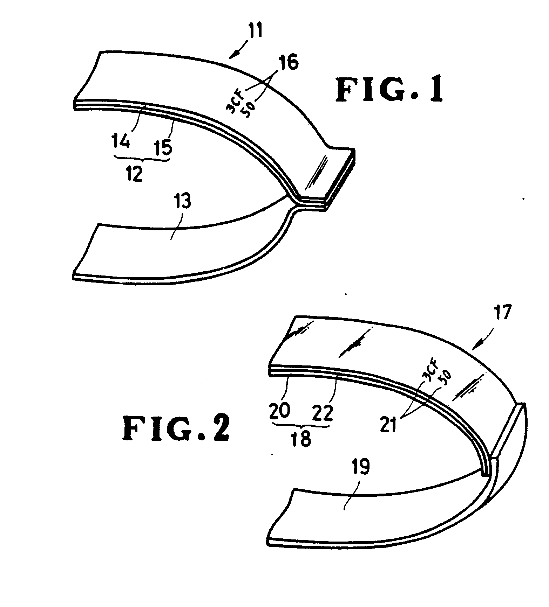

As shown in Figure 1, a labeling band 11 embodying the invention comprises a pair of upper and lower strips 12, 13 bonded or otherwise fused together along one end edges thereof. The upper strip 12 is made of thermally non-shrinkable material while the lower strip 13 is made of thermally shrinkable material such as vinyl chloride, polyethylene or the like. The upper strip 12 is composed of a sheet 14 of paper and a film 15 of thermally non-shrinkable synthetic resin laminated to the underside of the paper sheet 14, the film 15 being joined with the lower strip 13. The upper strip 12 has various characters 16 printed on the front surface of the paper sheet 14 for indicating product information such as the type, size, color, quantities, etc. of at least one product to which the band 11 is fastened. The characters 16 may be printed during the course of application of the band 11 to the product. The band 11 thus constructed is looped around the product and then the free end edges of the strips 12, 13 are bonded or otherwise fused together. When the band 11 is subjected to a heating medium such as hot air, the thermally shrinkable lower strip 13 contracts to enable the band 11 to firmly fit around the product. The thermally non-shrinkable upper strip 12 maintains its original size to thereby prevent the characters 16 from being deformed.

Figure 2 shows a modified band 17 which comprises an upper strip 18 of printable, thermally non-shrinkable material joined along its one end edge with an end edge of a lower strip 19 of thermally shrinkable material such as vinyl chloride or polyethylene. The upper strip 18 is composed of a sheet 20 of paper having reference characters 21 printed on one surface of the paper sheet 20, and a transparent film 22 of thermally non-shrinkable synthetic resin coated on the printed surface of the paper sheet 20. The end edge of the lower strip 19 laps over the end edge of the synthetic resin film 22 and is bonded or otherwise fused with the latter. With the band 17 looped around at least one product, the free end edges of the strips 18, 19 are bonded or otherwise fused together. Then, the band 17 is heated by hot air whereupon the thermally shrinkable lower strip 19 is shrunk to thereby enable the band 17 to firmly fit around the product. The thermally non-shrinkable upper strip 18 is however dimensionally unchanged so that the reference characters 21 are protected from becoming distorted and unclear. The transparent synthetic resin film 22 serves to reinforce the paper sheet 20 and to protect the same from stains on the characters 21.

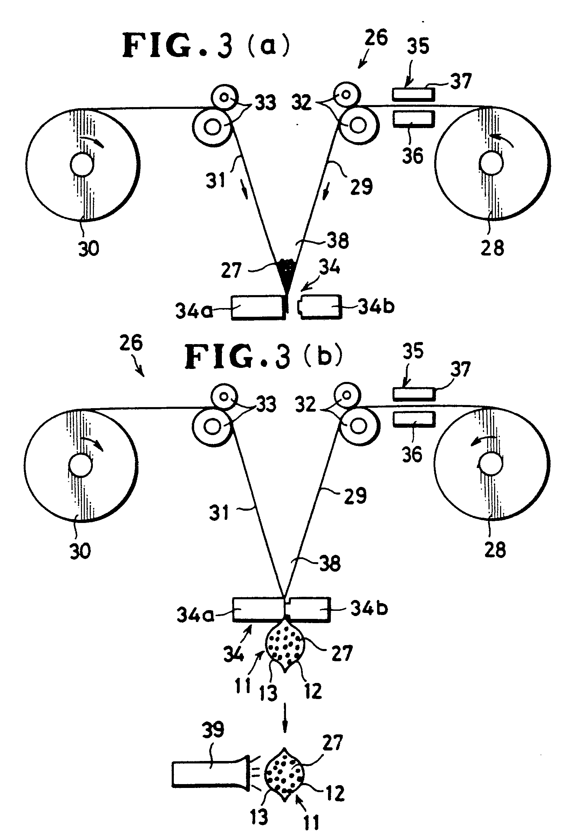

The thermally shrinkable bands 11, 17 of the invention are particularly useful for bundling elongated products. Figures 3(a) and 3(b) show an apparatus 26 for binding products 27 into bundles by means of a plurality of ones of the band 11 shown in Figure 1.

The binding apparatus 26 comprises a first reel 28 on which a continuous strip 29 of printable, thermally non-shrinkable material is wound, a second reel 30 on which a continuous strip 31 of thermally shrinkable material is wound, the strips 29, 31 being the same in structure and material as the strips 12, 13, respectively, of Figure 1. Two pairs of feed rollers 32, 33 are disposed downstream of the reels 28, 30, respectively, and synchronously drivable to intermittently feed the respective strips 29, 31 toward a heat-sealing unit 34. The unit 34 has a conventional structure and includes an anvil 34*a* and an ultrasonic horn 34*b* disposed opposite to the anvil 34*a*, the anvil 34*a*

and the ultrasonic horn 34*b* being relatively movable toward each other to unite the strips 29, 31 across the widths thereof, thereby forming a labeling strip of continuous length. The heat-sealing unit 34 further includes a cutting blade (not shown) coacting with one of the anvil 34*a* and the ultrasonic horn 34*b* to sever the strips 29, 31 centrally along one welded portion. Thus, repeated actuation of the heat-sealing unit 34 will produce a plurality of the bands 11 of individual length from the continuous labeling strip. A printing unit 35 is disposed between the pair of feed rollers 32 and the reel 28 and it includes a printing plate 36 and a platen 37 confronting to the printing plate 36 with the strip 29 extending between the printing plate 36 and the platen 37. The platen 37 is movable toward the plate 36 to force the strip 29 against the printing plate 36 for printing on the strip 29 various characters indicative of product information such as the type, size, color, quantities, etc. of the products 27. The printing plate 36 is disposed on the side of the strip 29 which is exposed to the view when the strip 29 is fastened around the products 27. A hot-air blower 39 (Figure 3(b)) is disposed downstream of the heat-sealing unit 34 for forcing hot air against the strip 31 of each of the severed bands 11.

In operation, the heat-sealing unit 34 is actuated to unite the strips 29, 31 along the leading edges thereof which have been introduced between the anvil 34*a* and the ultrasonic horn 34*b*. The strips 29, 31 thus united jointly form a V-shaped pocket 38 for receiving therein the products 27. When a predetermined amount of products 27 is stacked in the pocket 38, the feed rollers 32, 33 are rotated to advance the respective strips 29, 31 for a predetermined distance. The heat-sealing unit 34 is again actuated to unite the strips 29, 31 at a point diametrically opposite to the welded leading end edges thereof to form one of the bands 11 looping around the products 27. Substantially at the same time or slightly thereafter, the cutting blade of the heat-sealing unit 34 severs the band 11 from the continuous labeling strip. The band 11 thus severed is subjected to hot air ejected from the blower 39, whereupon the strip 31 is thermally shrunk to thereby enable the band 11 to firmly hold the products 27 together. Each time the strips 29, 31 are at rest, the platen 37 is actuated to press the strip 29 against the printing plate 36 for printing various characters on the strip 29.

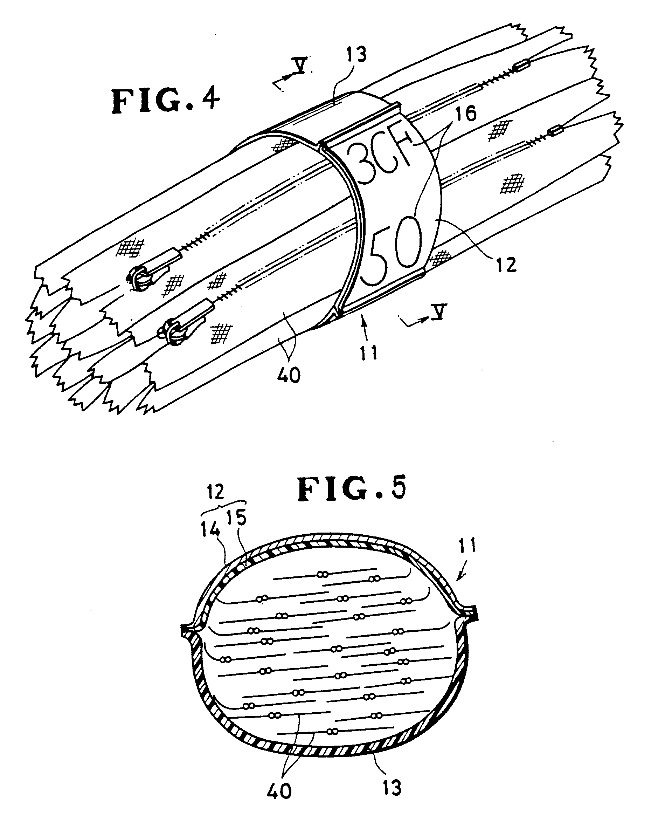

Figures 4 through 7 show the manner in which a plurality of finished slide fasteners 40 is bounded by the band 11 of Figure 1. Before the strip 13 is subjected to heat, the slide fasteners 40 are loosely held together by the band 11, as shown in Figures 4 and 5.

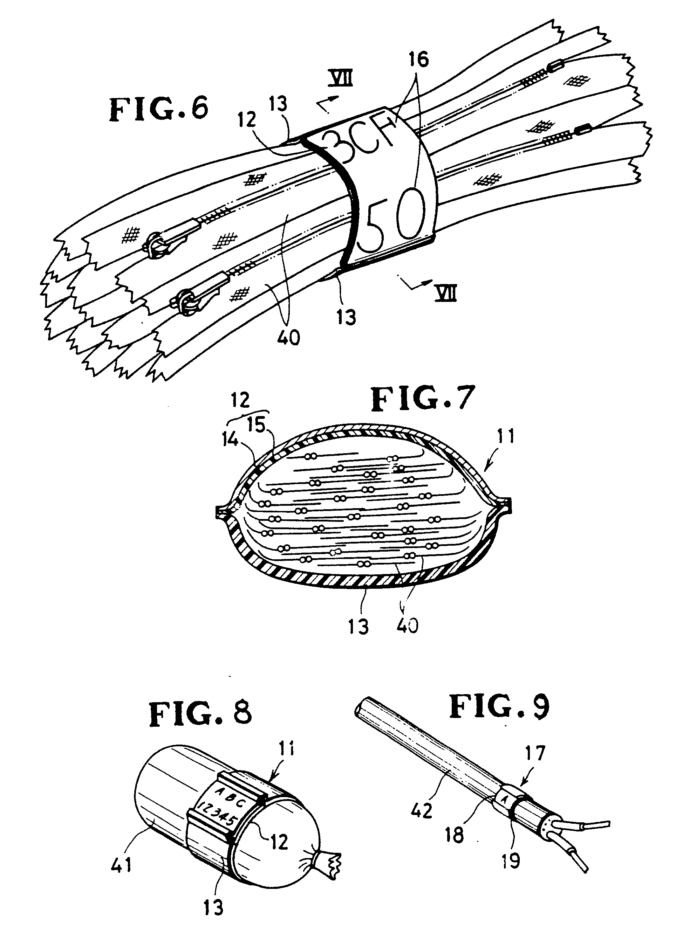

As shown in Figures 6 and 7, after thermal shrinking of the strip 13, the band 11 firmly hold the slide fasteners 40. Since the strip 12 is thermally non-shrinkable and hence can maintain its original shape and dimensions, the characters 16 printed on the strip 12 are free from distortion.

As shown in Figure 8, the band 11 of Figure 1 also can be fastened firmly around a packed cylindrical product 41 by thermal shrinking of the strip 13. The characters 16 on the thermally non-shrinkable strip 12 are clear and free from distortion.

The band 17 of Figure 2 is used as a marking band for an electric cord 42, as shown in Figure 9. Due to thermal shrinking of the strip 19, the band 17 is firmly fit around the cord 42. Since the strip 18 is thermally non-shrinkable and has the external transparent film layer (Figure 2) 22 provided on the printed surface of the paper sheet 20, the band 17 is clear and stain-free.

**Claims**

1. Thermally shrinkable labeling band adapted to be heat-fit around one or more products, comprising first and second strip members (12, 13; 18, 19) joined together along their end edges, respectively, to form a closed loop, said first strip member including one surface of printable material having at least one character (16, 21; 25) printed thereon, characterized in that said first strip member (12; 18) includes a sheet (14, 20) of paper and a film (15; 22) of thermally non-shrinkable synthetic resin laminated with one of the surfaces of said paper sheet, and that said second strip member (13; 19) is made of thermally shrinkable material, the end edges of which being united with said synthetic resin film (15; 22) of the first strip member (12; 18) at the end edges thereof.

2. A labeling band according to claim 1, said paper sheet (14) having at least one character (16) printed on the surface opposite said synthetic resin film.

3. A labeling band according to claim 1, said synthetic resin film (22) being transparent and provided on the surface of said paper sheet (20) upon which the at least one character is printed.

**Patentansprüche**

1. Warmschrumpfbares Etikettierband, das um einen oder mehrere Gegenstände aufschrumpfbar ist, bestehend aus ersten und zweiten Streifenteilen (12, 13; 18, 19), die an ihren Endrändern miteinander verbunden sind, um eine geschlossene Schlaufe zu bilden, wobei das erste Streifenteil eine Oberseite aus bedruckbarem Material aufweist, auf die mindestens ein Schriftzeichen (16, 21; 25) aufgedruckt ist, dadurch gekennzeichnet, daß das erste Streifenteil (12; 18) eine Papierbahn (14, 20) und eine Folie (15; 22) aus nicht warmschrumpfbarem Kunstharz aufweist, die mit einer der Oberseiten der Papierbahn laminiert ist, und daß das zweite Streifenteil (13; 19) aus warmschrumpfbarem Material besteht, dessen Endränder mit der Kunstharzfolie (15; 22) des ersten Streifenteils (12; 18) an den Endrändern desselben verbunden sind.

2. Etikettierband nach Anspruch 1, dadurch gekennzeichnet, daß die Papierbahn (14) auf ihrer der Kunstharzfolie gegenüberliegenden Oberseite mit mindestens einem Schriftzeichen (16) bedruckt ist.

3. Etikettierband nach Anspruch 1, dadurch gekennzeichnet, daß die Kunstharzfolie (22) durchsichtig und auf derjenigen Oberseite der Papierbahn (20) angeordnet ist, die mit dem mindestens einen Schriftzeichen bedruckt ist.

**Revendications**

1. Bande d'étiquetage thermorétractable adaptée à être posée à chaud autour d'un ou de plusieurs produits, comprenant un premier et un second élément en forme de bande (12, 13; 18, 19) assemblés le long de leurs bords extrêmes respectivement pour former une boucle fermée, ledit premier élément en forme de bande comprenant une surface en un matériau susceptible d'être imprimé et sur lequel est imprimé au moins un caractère (16, 21, 25), caractérisée par le fait que ledit premier élément en forme de bande (12; 18) comprend une feuille (14, 20) de papier et un film (15; 22) en résine synthétique non thermorétractable accolée à l'une des surfaces de ladite feuille de papier, et ledit second élément en forme de bande (13; 19) est fabriqué en matériau thermorétractable, les bords extrêmes de ce dernier étant assemblés avec ledit film en résine synthétique (15; 22) du premier élément en forme de bande (12; 18) sur ses bords extrêmes.

2. Bande d'étiquetage selon la revendication 1, dans laquelle ladite feuille de papier (14) comporte au moins un caractère (16) imprimé sur sa surface opposée audit film en résine synthétique.

3. Bande d'étiquetage selon la revendication 1, dans laquelle ledit film en résine synthétique (22) est transparent et placé sur la surface de ladite feuille de papier (20) sur laquelle un caractère au moins est imprimé.

FIG. 1

FIG. 2

FIG.3 (a)

FIG.3 (b)

**FIG.4**

**FIG.5**

3

**FIG. 6**

**FIG. 7**

**FIG. 8**

**FIG. 9**

4